# EUROPÄISCHE PATENTANMELDUNG

(11) **EP 1 453 245 A1**
(43) Veröffentlichungstag der Anmeldung: **01.09.2004**
(21) Anmeldenummer: 03004531.4
(22) Anmeldetag: 28.02.2003
(51) Int. Cl.: H04L 12/28

(54) **Routing Verfahren für Adhoc Netze**

(71) Anmelder: SIEMENS AKTIENGESELLSCHAFT, 80333 München (DE)
(72) Erfinder: Gruber, Ingo, 80225 Gilching (DE); Li, Hui, Dr., 90489 Nürnberg (DE)

(57) **Zusammenfassung**

Die Erfindung betrifft ein Verfahren zur Organisation in einem Funkkommunikationssystem, umfassend eine Vielzahl teilnehmerseitigen Funkstationen (1, 2, 3, 4, 5, 6) mit jeweils einer Funkreichweite (C) und eine zentrale Funkstation (Z), wobei die teilnehmerseitigen Funkstationen (1, 2, 3, 4, 5, 6) zumindest teilweise mobil sind, wobei jede Funkstation (Z, 1, 2, 3, 4, 5, 6) sich innerhalb der Funkreichweite (C) von zumindest einer benachbarten teilnehmerseitigen Funkstation (1, 2, 3, 4, 5, 6) befindet, wobei zur Übertragung von Nutzdaten diese Nutzdaten von Funkstation (Z, 1, 2, 3, 4, 5, 6) zu Funkstation (Z, 1, 2, 3, 4, 5, 6) über die Funkreichweite (C)einer teilnehmerseitigen Funkstation (1, 2, 3, 4, 5, 6) gesendet werden, wobei im Funkkommunikationssystem von jeder beliebigen ersten teilnehmerseitigen Funkstation (1, 2, 3, 4, 5, 6) zu jeder beliebigen zweiten teilnehmerseitigen Funkstation (1, 2, 3, 4, 5, 6) Nutzdaten direkt oder über eine oder mehrere andere Funkstationen (Z, 1, 2, 3, 4, 5, 6) übertragbar sind. Erfindungsgemäß sendet die zentrale Funkstation (Z) Informationen über die benachbarte oder die benachbarten teilnehmerseitigen Funkstationen (1, 2, 3, 4, 5, 6) einer jeden teilnehmerseitigen Funkstation (1, 2, 3, 4, 5, 6) innerhalb zumindest eines Teilbereichs des Funkkommunikationssystems an die Vielzahl von teilnehmerseitigen Funkstationen (1, 2, 3, 4, 5, 6) innerhalb zumindest des Teilbereichs des Funkkommunikationssystems.

Durch das erfindungsgemäße Verfahren kann der Signalisierungsaufwand in Adhoc Netzwerken reduziert werden.

## Beschreibung

Die Erfindung betrifft ein Verfahren zur Organisation in einem Funkkommunikationssystem nach dem Oberbegriff des Anspruchs 1.

In Funkkommunikationssystemen werden Informationen (beispielsweise Steuersignale oder Nutzdaten wie Sprache, Bilder, Kurznachrichten oder andere Daten) mittels elektromagnetischer Wellen über eine Funkschnittstelle zwischen sendender und empfangender Funkstation übertragen.

In Adhoc Netzen (auch selbstorganisierende Netze genannt) sind Funkstationen in der Lage, ohne eine vermittelnde zentrale Einrichtung eine Funkverbindung untereinander aufzubauen. Die Verbindung zwischen zwei Funkstationen erfolgt dabei entweder direkt oder bei größeren Entfernungen über weitere Funkstationen, die für diese Verbindung Relaisstationen bilden. Nutzinformationen werden somit von Funkstation zu Funkstation über Abstände gesendet, welche der Funkreichweite der Funkstationen entsprechen. Die Funkstationen eines selbstorganisierenden Netzes können mobile Funkstationen (beispielsweise Mobilfunkgeräte von Personen oder in Verkehrsfahrzeugen) und/oder vorwiegend stationäre Funkstationen (beispielsweise Computer, Drucker, Haushaltsgeräte) sein. Um Bestandteil eines Adhoc Netzes zu sein, muss sich eine Funkstation in dem Funkabdeckungsbereich von zumindest einer benachbarten Funkstation befinden. Beispiele für selbstorganisierende Netze sind die Wireless Local Area Networks (WLANs) wie HiperLAN oder IEEE 802.11. Anwendung finden solche Netze nicht nur in den üblichen Internet- und Telematikbereichen sondern auch im Bereich der Inter-Fahrzeugkommunikation, wie z. B. bei Systemen zur Gefahrenwarnungen oder kooperativen Fahrerassistenzsystemen.

Ein besonderer Vorteil von Adhoc Netzen liegt in ihrer großen Mobilität und Flexibilität. Diese Faktoren stellen jedoch auch eine große Herausforderung für Routing Verfahren dar. In einem aus mehreren Funkstationen bestehenden Funkkommunikationssystem muss für ein Datenpaket ein Weg von dem Sender gegebenenfalls über mehrere das Datenpaket weiterleitende Funkstationen zu dem Empfänger gefunden werden. Die Auswahl des Weges bezeichnet man als Routing. Handelt es sich bei den Funkstationen um mobile Funkstationen, so ändert sich in der Regel die Topologie des Netzwerkes mit der Zeit. Ein geeignetes Routing Verfahren muss diesen ständigen Veränderungen Rechnung tragen.

Hierfür existieren proaktive und reaktive Routing Verfahren. Bei einem proaktiven Routing Verfahren kennt jede Funkstation zu jedem Zeitpunkt alle Nachbarn einer jeden Funkstation. Somit kann eine Funkstation eine beliebige Verbindung zu einer anderen Funkstation des Adhoc Netzes bei Bedarf sofort aufbauen. Dieses Vorgehen erweist sich dann als nachteilhaft, wenn die Bewegungsgeschwindigkeit der mobilen Funkstationen groß ist oder wenn große Datenmengen übermittelt werden sollen. Bei Verwendung eines reaktiven Routing Verfahrens ist den Funkstationen die aktuelle Topologie des Netzwerkes nicht bekannt. Bei Bedarf flutet eine Funkstation das Netz mit einer Nachricht, durch welche ein Pfad zu der als Empfänger gewünschten Funkstation aufgebaut wird. Die Flutungsnachricht enthält die Adresse der sendenden und der empfangenden Funkstation.

Bei den AODV (Adhoc On Demand distance Vector Routing) und DSR (Dynamic Source Routing) Verfahren handelt es sich um bekannte Vertreter von reaktiven Routing Algorithmen. Bei dem DSR Verfahren enthält das Paket mit den Nutzinformationen sämtliche Adressen des Pfades zwischen dem Sender und dem Empfänger, während bei dem AODV Verfahren die einzelnen Funkstationen des Pfades ihren jeweiligen für den Pfad relevanten Nachbarn speichern.

Je größer die Anzahl der Funkstationen ist, welche das Adhoc Netz aufbauen, desto aufwendiger wird es, mittels Flutungsnachrichten die aktuelle Topologie des Netzes zu ermitteln. Die Anzahl der zu sendenden Flutungsnachrichten steigt mit der Anzahl der Funkstationen rasch an, so dass bei vielen Funkstationen das Volumen an Nutzinformationen, welches versendet werden kann, aufgrund der großen Menge an Flutungsnachrichten deutlich reduziert wird.

Der Erfindung liegt die Aufgabe zugrunde, ein Verfahren der eingangs genannte Art vorzustellen, welches ein effizientes Routing in einem Netzwerk, welches eine Vielzahl von zumindest teilweise mobilen Funkstationen umfasst, erlaubt.

Diese Aufgabe wird durch ein Verfahren mit den Merkmalen des Anspruchs 1 gelöst.

Weiterbildungen und Ausgestaltungen sind Gegenstand der Unteransprüche.

Das Funkkommunikationssystem umfasst eine Vielzahl von teilnehmerseitigen Funkstationen mit einer jeweiligen Funkreichweite und eine zentrale Funkstation. Die teilnehmerseitigen Funkstationen sind zumindest teilweise mobil. Jede Funkstation befindet sich innerhalb der Funkreichweite von zumindest einer benachbarten teilnehmerseitigen Funkstation. Zur Übertragung von Nutzdaten werden diese Nutzdaten von Funkstation zu Funkstation über die Funkreichweite einer teilnehmerseitigen Funkstation gesendet. In dem Funkkommunikationssystem sind Nutzdaten von jeder beliebigen ersten teilnehmerseitigen Funkstation zu jeder beliebigen zweiten teilnehmerseitigen Funkstation direkt oder über eine oder mehrere andere Funkstationen übertragbar. Erfindungsgemäß sendet die zentrale Funkstation Informationen über die benachbarte oder die benachbarten teilnehmerseitigen Funkstationen einer jeden teilnehmerseitigen Funkstation innerhalb zumindest eines Teilbereichs des Funkkommunikationssystems an die Vielzahl von teilnehmerseitigen Funkstationen innerhalb zumindest des Teilbereichs des Funkkommunikationssystems.

Zur Übertragung von Nutzdaten werden diese Nutzdaten also von einer ersten teilnehmerseitigen Funkstation an eine benachbarte Funkstation versendet. Bei der benachbarten Funkstation kann es sich um den bestimmungsgemäßen Empfänger der Nutzdaten handeln. In diesem Fall wurden die Nutzdaten direkt übertragen. In der Regel ist dies nicht der Fall, so dass die benachbarte Funkstation die Nutzdaten an eine ihr benachbarte Funkstation weiterleitet. Auf diese Art werden die Nutzdaten über mehrere Sprünge zu dem bestimmungsgemäßen Empfänger weitergeleitet. Eine Weiterleitung kann auch über die zentrale Funkstation erfolgen, welche die Nutzdaten wie auch die teilnehmerseitigen Funkstationen über eine Distanz der Länge der Funkreichweite der teilnehmerseitigen Funkstationen weiterleitet. Die teilnehmerseitigen Funkstationen müssen nicht alle eine identische Funkreichweite aufweisen, in der Regel sind die Funkreichweiten der teilnehmerseitigen Funkstationen eines Adhoc Netzwerkes jedoch ähnlich groß.

Die zentrale Funkstation sendet Informationen über Nachbarschaftsbeziehungen von teilnehmerseitigen Funkstationen des Funkkommunikationssystems, d.h. Netzwerkinformationen. Die Informationen können sowohl nur einen Teilbereich des Funkkommunikationssystems betreffen, als auch das ganze System, d.h. jede der teilnehmerseitigen Funkstationen. Durch diese Informationen werden die teilnehmerseitigen Funkstationen innerhalb des betreffenden Teilbereichs über alle Nachbarschaftsbeziehungen des jeweiligen Teilbereichs aufgeklärt. Die Funkreichweite der zentralen Funkstation bezüglich der Versendung der Informationen entspricht mindestens der Ausdehnung des Funkkommunikationssystems bzw. des Teilbereichs desselben. Diese Funkreichweite ist mindestens so groß wie die Funkreichweite der teilnehmerseitigen Funkstationen.

Die zentrale Funkstation muss sich aufgrund ihres Aufbaus nicht von den teilnehmerseitigen Funkstationen unterscheiden. Vielmehr kann auch eine teilnehmerseitige Funkstation die Rolle der zentralen Funkstation übernehmen, insofern sie die zur Durchführung des erfindungsgemäßen Verfahrens benötigten Eigenschaften aufweist. Insbesondere gehört hierzu eine Funkreichweite, die ausreichend groß ist, um den teilnehmerseitigen Funkstationen innerhalb des Teilbereichs Informationen zu senden. Die zentrale Funkstation kann sich somit von den teilnehmerseitigen Funkstationen durch ihren Aufbau und/oder durch ihre Funktion bezüglich des erfindungsgemäßen Verfahrens unterscheiden.

Dadurch, dass die teilnehmerseitigen Funkstationen von der zentralen Funkstation über die Nachbarschaftsbeziehungen informiert werden, kann der Aufwand an Flutungsnachrichten, welche zur Ermittlung der aktuellen Topologie des Netzwerkes vonnöten sind, in der Regel deutlich reduziert werden. Dies hat zur Folge, dass der Signalisierungsaufwand innerhalb des Funkkommunikationssystems verringert ist, womit mehr Kapazität zur Versendung von Nutzdaten zur Verfügung steht.

In Weiterbildung der Erfindung sendet die zentrale Funkstation zusätzlich Informationen über die benachbarte oder die benachbarten teilnehmerseitigen Funkstationen der zentralen Funkstation. Dies kann dadurch realisiert werden, dass die zentrale Funkstation im Rahmen der Benachrichtigung über die Nachbarschaftsbeziehungen der teilnehmerseitigen Funkstationen auch über ihre eigenen Nachbarschaftsbeziehungen informiert.

In einer Ausgestaltung der Erfindung sendet die zentrale Funkstation die Informationen per Rundsenderuf, d.h. per Broadcast.

Vorteilhafterweise wurden die Informationen von der Vielzahl von teilnehmerseitigen Funkstationen ermittelt. Dies bedeutet jedoch nicht, dass jede teilnehmerseitige Funkstation aus dieser Vielzahl den gleichen Beitrag zur Ermittlung der Informationen liefert. Betreffen die Informationen nur einen Teilbereich des Funkkommunikationssystems, so sind die teionehmerseitigen Funkstationen außerhalb des Teilbereiches an der Ermittlung nicht beteiligt.

In Weiterbildung der Erfindung senden zur Ermittlung der Informationen die teilnehmerseitigen Funkstationen innerhalb zumindest des Teilbereichs des Funkkommunikationssystems Signale zur Anfrage nach benachbarten teilnehmerseitigen Funkstationen aus, auf welche Signale hin die jeweiligen benachbarten teilnehmerseitigen Funkstationen unter der Bedingung, dass sie noch keiner anderen benachbarten teilnehmerseitigen Funkstation eine Antwort gesendet haben, eine Antwort senden. Eine teilnehmerseitige Funkstation antwortet also nur auf die erste Flutungsnachricht, mit welcher die aktuelle Topologie des Netzwerkes ermittelt werden soll. Dies dient zur Vermeidung von Redundanzen.

Vorzugsweise übermitteln bestimmte teilnehmerseitige Funkstationen den benachbarten teilnehmerseitigen Funkstationen, welchen sie eine Antwort gesendet haben, Informationen über benachbarte teilnehmerseitige Funkstationen, welchen sie keine Antwort gesendet haben. Dieses Vorgehen resultiert in einer Bündelung von Nachbarschaftsinformationen bei denjenigen teilnehmerseitigen Funkstationen, welche eine Antwort auf ihre Flutungsnachricht erhalten haben. Die teilnehmerseitigen Funkstationen, welche diese Informationen versenden, unterliegen einer Bedingung. Ein Beispiel für die Art der Bedingung sind Bedingungen, die an die Adresse der teilnehmerseitigen Funkstation oder an die Anzahl der Nachbarn anknüpfen.

Einer Ausgestaltung der Erfindung gemäß sendet die zentrale Funkstation die Informationen regelmäßig. Die Informationen werden also in bestimmten Zeitabständen, welche z.B. zwischen 0.1 Sekunden und 5 Minuten liegen können, oder auch einem Vielfachen einer Taktfrequenz der teilnehmerseitigen Funkstationen entsprechen können, versendet. Hierbei bezieht sich jede Versendung der Informationen auf die aktuelle oder nahezu aktuelle Topologie des Netzwerkes. Zwischen den Versendungen findet eine erneute Ermittlung der Nachbarschaftsbeziehungen der teilnehmerseitigen-Funkstationen statt.

Im folgenden wird die Erfindung anhand eines Ausführungsbeispiels näher erläutert. Dabei zeigen
Figur 1: ein Funkkommunikationssystem,
Figur 2: einen Ausschnitt eines Funkkommunikationssystems,
Figur 3: einen ersten Teil eines erfindungsgemäßen Verfahrens,
Figur 4: einen zweiten Teil eines erfindungsgemäßen Verfahrens,
Figur 5: einen dritten Teil eines erfindungsgemäßen Verfahrens,
Figur 6: einen vierten Teil eines erfindungsgemäßen Verfahrens,
Figur 7: einen Baum an Nachbarschaftsbeziehungen,
Figur 8: die Versendung eines Rundsenderuf durch die zentrale Funkstation.

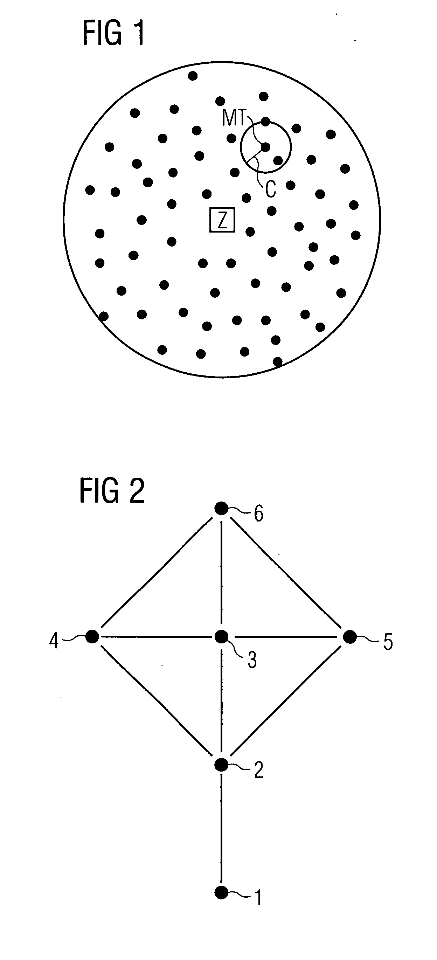

Figur 1 stellt schematisch ein Funkkommunikationssystem bzw. ein das Funkkommunikationssystem bildendes Netzwerk von Funkstationen dar. Hierbei kann es sich z.B. um ein IEEE 802.11 WLAN (Wireless Local Area Network) handeln. Etwa in der Mitte des Netzwerkes befindet sich eine zentrale Funkstation Z. Weiterhin besteht das Netzwerk aus einer Vielzahl von mobilen Funkstationen MT. Um eine der mobilen Funkstationen MT ist eine typische Funkreichweite C einer mobilen Funkstation durch einen Kreis gekennzeichnet. Der genaue Wert der Funkreichweite kann sich von mobiler Funkstation zu mobiler Funkstation unterscheiden: So ist es möglich, dass sich in dem betrachteten Funkkommunikationssystem verschiedenartige Funkstationen befinden und miteinander kommunizieren. Weiterhin können es sich bei manchen der Funkstationen auch um stationäre Funkstationen handeln. Es ist zu erkennen, dass die betrachtete Funkstation MT innerhalb ihrer Funkreichweite C zwei benachbarte Funkstationen aufweist. Aufgrund der Mobilität der Funkstationen ändern sich die Nachbarschaftsbeziehungen der Funkstationen untereinander und somit die Topologie des Netzwerkes mit der Zeit.

Der Funkabdeckungsbereich der zentralen Funkstation Z, welcher in etwa dem größeren der beiden Kreise in Figur 1 entspricht, ist deutlich größer als derjenige der Funkstationen MT. Die Funkstationen MT sind mit zwei Arten von Funkschnittstellen ausgestattet: einer ersten für die Kommunikation zwischen den Funkstationen MT, und einer zweiten für dem Empfang von Informationen von der zentralen Funkstation Z. Auch die zentrale Funkstation weist derartige Funkschnittstellen auf, jedoch wird die zweite Funkschnittstelle zur Versendung von Informationen verwendet.

Im folgenden wird das erfindungsgemäße Verfahren anhand eines kleinen Ausschnittes aus einem Funkkommunikationssystem, wie in Figur 2 veranschaulicht, verdeutlicht. Dieser Ausschnitt besteht aus den mobilen Funkstationen 1, 2, 3, 4, 5 und 6. In Figur 2 sind die Verbindungen zwischen benachbarten Funkstationen mit Linien gekennzeichnet. Die Funkstation 1 ist benachbart zu der Funkstation 2, die Funkstation 2 zu den Funkstationen 1, 3, 4 und 5, die Funkstation 3 zu den Funkstationen 2,4,5, und 6, die Funkstation 4 zu den Funkstationen 2,3 und 6, die Funkstation 5 zu den Funkstationen 2,3 und 6, sowie die Funkstation 6 zu den Funkstationen 3,4 und 5. Insgesamt existieren neun Verbindungen bzw. Nachbarschaftsbeziehungen zwischen den Funkstationen 1, 2, 3, 4, 5 und 6. Dies neun Verbindungen, d.h. die aktuelle Topologie des Netzwerkes, sollen ermittelt und den Funkstationen 1, 2, 3, 4, 5 und 6 bekannt gegeben werden. Hierzu sammeln die Funkstationen 1, 2, 3, 4, 5 und 6 Informationen über ihre Nachbarn und senden diese auf geeignete Weise zu der zentralen Funkstation.

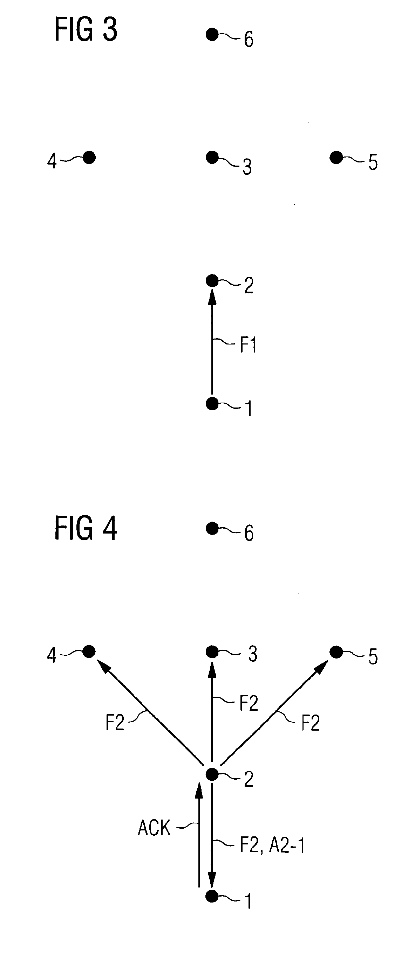

Es wird angenommen, dass sich die Funkstation 1 am nächsten zu der zentralen Funkstation befindet. Die Funkstation 1 leitet das Verfahren ein, indem sie eine Flutungsnachricht F1 sendet, wie in Figur 3 dargestellt. Diese Nachricht F1 wird als Rundsenderuf versendet, so dass alle Nachbarn der Funkstation 1 die Flutungsnachricht F1 erhalten. Die Flutungsnachricht F1 beinhaltet die Information, dass es sich um eine Nachricht handelt, mittels welcher die Nachbarschaftsbeziehungen des Netzwerkes ermittelt werden sollen, sowie eine Identifikationsnummer der Flutungsnachricht F1 und die Identifikationsadresse der Funkstation 1.

Den Anstoß zur Versendung der Flutungsnachricht F1 erhält die Funkstation 1 z.B. von der zentralen Funkstation. Es ist auch möglich, dass die Funkstation 1 diese Flutungsnachricht F1 nach dem Ablauf einer ihr bekannten Zeitspanne seit der letzten von ihr gesendeten Flutungsnachricht F1 sendet.

Die Funkstation 2 sendet nach dem Empfang der Flutungsnachricht F1 von der Funkstation 1 ebenfalls eine Flutungsnachricht F2. Diese Versendung ist in Figur 4 dargestellt. Die Flutungsnachricht F2 beinhaltet die Information, dass es sich um eine Nachricht handelt, mittels welcher die Nachbarschaftsbeziehungen des Netzwerkes ermittelt werden sollen, sowie die Identifikationsnummer der Flutungsnachricht F2, die Identifikationsadresse der Funkstation 2 und die Information, dass die Funkstation 2 die Funkstation 1 als ihr benachbarte relevante Funkstation auf dem Weg zu der zentralen Funkstation betrachtet. Letztere Information ist nur für die Funkstation 1 von Interesse und nicht für die übrigen Nachbarstationen der Funkstation 2. Über die benachbarte relevante Funkstation auf dem Weg zu der zentralen Funkstation werden die Informationen über die Nachbarschaftsbeziehungen zu der zentralen Funkstation gesendet. Aufgrund der Information über die benachbarte relevante Funkstation auf dem Weg zu der zentralen Funkstation handelt es sich bei der Flutungsnachricht F2 der Funkstation 2 für die Funkstation 1 um eine Antwort A2-1 auf ihre eigene Flutungsnachricht F1. Die Funkstation 1 kann der Antwort A2-1 der Funkstation 2 entnehmen, dass die Funkstation 2 ihre Nachbarfunkstation ist, und weiterhin, dass sie von der Funkstation 2 Informationen erhalten wird, welche an die zentrale Funkstation weiterzuleiten sind.

Um die Zuverlässigkeit des Verfahrens zu erhöhen, ist es möglich, dass die Funkstation 1 auf die Antwort A2-1 der Funkstation 2 hin eine Bestätigungsmeldung ACK an die Funkstation 2 sendet. Diese Bestätigungsmeldung ACK kann die Funkstation 2 z.B. darüber informieren, dass die Funkstation 1 unbegrenzt oder eine bestimmte Zeitspanne auf den Erhalt von Informationen bezüglich der Topologie des Netzwerkes von der Funkstation 2 warten wird. Nach Ablauf der Zeitspanne kann die Funkstation 1 dann der zentralen Station melden, dass sie keine Information über die Nachbarschaftsbeziehungen innerhalb des Netzwerkes von der Funkstation 2 empfangen hat.

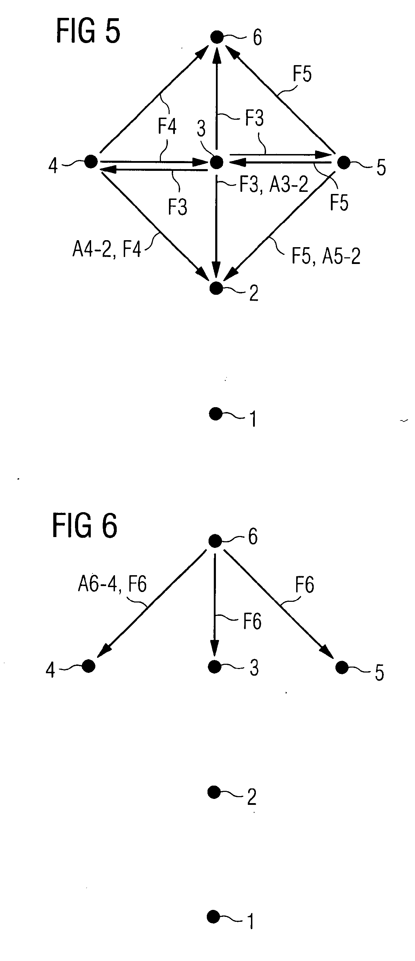

Die Funkstationen 3,4 und 5 empfangen die Flutungsnachricht der Funkstation 2, woraufhin sie eigene Flutungsnachrichten F3, F4 und F5 senden. Diese Versendung ist in Figur 5 dargestellt. Die Flutungsnachrichten F3, F4 und F5 enthalten die Information, dass es sich um eine Nachricht handelt, mittels welcher die Nachbarschaftsbeziehungen des Netzwerkes ermittelt werden sollen, sowie die Identifikationsnummer der Flutungsnachricht F3, F4 oder F5, die Identifikationsadresse der jeweiligen Funkstation 3,4 oder 5 und die Information, dass die jeweilige Funkstation 3,4 oder 5 die Funkstation 2 als ihr benachbarte relevante Funkstation auf dem Weg zu der zentralen Funkstation betrachtet. Die Funkstation 2 betrachtet diese drei Flutungsnachrichten als Antworten A3-2, A4-2 und A5-2 auf ihre Flutungsnachricht F2. Ihr ist nun bekannt, dass sie außer der Funkstation 1 drei weitere Nachbarn aufweist. Da die drei Funkstationen 3,4 und 5 der Funkstation 2 angezeigt haben, dass sie diese als benachbarte Funkstation für den Rückweg zu der zentralen Funkstation betrachten, geht die Funkstation 2 davon aus, dass sie drei Nachrichten mit Informationen über die Nachbarschaftsbeziehungen erhalten wird, welche sie an die Funkstation 1 weiterleiten wird.

Weiterhin erhält die Funkstation 3 die Flutungsnachricht F4 der Funkstation 4 und umgekehrt. Ebenso erhält die Funkstation 5 die Flutungsnachricht F3 der Funkstation 3 und umgekehrt. Da die Funkstationen 3,4 und 5 jedoch zu dem Zeitpunkt des Empfangs der jeweiligen Flutungsnachrichten F3, F4 oder F5 ihrer benachbarten Funkstation 3,4 oder 5 bereits eine eigene Flutungsnachricht F3, F4 oder F5 gesendet haben, antworten sie auf den Empfang der Flutungsnachrichten F3, F4 oder F5 ihrer jeweiligen Nachbarstationen nicht. Der Funkstation 4 ist nun bekannt, dass sie neben der Funkstation 2, auf deren Flutungsnachricht F2 hin sie ihre Flutungsnachricht F4 gesendet hat, und welche sie als Funkstation auf dem Rückweg zur zentralen Funkstation betrachtet, die Funkstation F3 als weiteren Nachbarn aufweist. Auf analoge Weise ist der Funkstation 3 die Existenz der Funkstationen 4 und 5 in ihrer Nachbarschaft und der Funkstation 5 die Existenz der Funkstation 3 in ihrer Nachbarschaft bekannt.

Die Funkstation 6 erhält die drei Flutungsnachrichten F3, F4 und F5. Es wird im betrachteten Beispiel angenommen, dass die Flutungsnachricht F4 der Funkstation 4 die Funkstation 6 als erste erreicht. Die Funkstation 6 sendet daraufhin, wie in Figur 6 dargestellt, eine eigene Flutungsnachricht F6. Die Flutungsnachricht F6 beinhaltet die Information, dass es sich um eine Nachricht handelt, mittels welcher die Nachbarschaftsbeziehungen des Netzwerkes ermittelt werden sollen, sowie die Identifikationsnummer der Flutungsnachricht F6, die Identifikationsadresse der Funkstation 6 und die Information, dass die Funkstation 6 die Funkstation 4 als ihr benachbarte relevante Funkstation auf dem Weg zu der zentralen Funkstation betrachtet. Die Funkstation 4 betrachtet diese Flutungsnachrichten F6 als Antwort A6-4 auf ihre Flutungsnachricht F4. Ihr ist nun bekannt, dass außer der Funkstation 2 und der Funkstation 3 die Funkstation F6 sich in ihrer Nachbarschaft aufhält. Auch die Funkstationen 3 und 5 erfahren aus der Flutungsnachricht F6 von der Existenz der Funkstation 6 in ihrer Nachbarschaft.

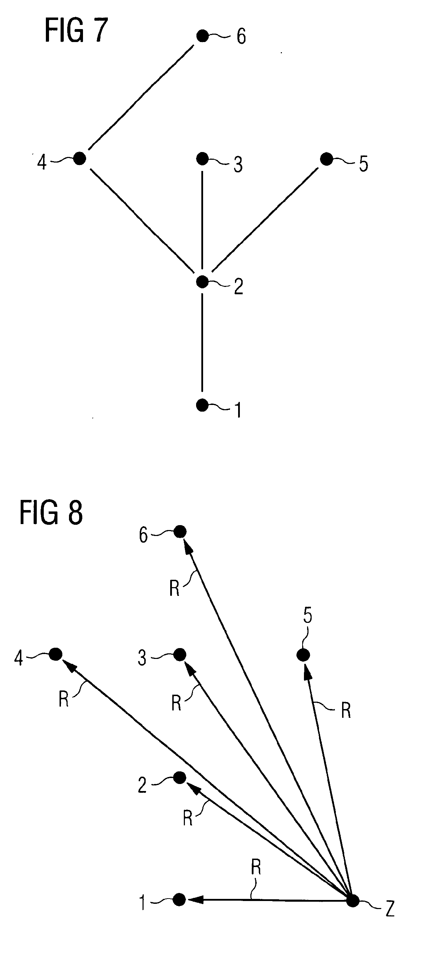

Diejenigen Funkstationen, welche eine Antwort auf ihre Flutungsnachricht erhalten haben, senden die Adresse der jeweiligen Funkstation, welche sie als relevante Funkstation für den Rückweg zur zentralen Funkstation betrachten, zu derjenigen Funkstation, welche sie jeweils für den Rückweg zu der zentralen Funkstation verwenden. So sendet die Funkstation 4 die Adresse der Funkstation 6 an die Funkstation 2 und die Funkstation 2 sendet die Adressen der Funkstationen 3,4 und 5 an die Funkstation 1. Zusätzlich muss die Funkstation 1 die ihr von der Funkstation 4 übermittelte Adresse der Funkstation 6 bzw. die Nachbarschaftsbeziehung zwischen den Funkstationen 4 und 6 an die Funkstation 1 weiterleiten. Der somit erstellte Baum an Nachbarschaftsbeziehungen ist in Figur 7 dargestellt.

Um die Informationen über die Nachbarschaftsbeziehungen zwischen den Funkstationen 1, 2, 3, 4, 5 und 6 zu vervollständigen, müssen noch die Nachbarschaftsbeziehungen zwischen den Funkstationen 3 und 4, zwischen den Funkstationen 3 und 5, sowie zwischen den Funkstationen 3 und 6, und 5 und 6 ergänzt werden. Im Falle der Nachbarschaftsbeziehung zwischen den Funkstationen 3 und 6 z.B. kann sowohl die Funkstation 3 die Existenz der ihr benachbarten Funkstation 6 über die Funkstation 2 an die Funkstation 1 senden, als auch die Funkstation 6 die Existenz der ihr benachbarten Funkstation 3 über die Funkstationen 4 und 2 zur Funkstation 1. Senden beide Funkstation 3 und 6 diese Information, so erhält die Funkstation 2 redundante Informationen über die Nachbarschaftsbeziehungen. In diesem Fall kann entweder die Funkstation 2 oder die Funkstation 1 oder auch die zentrale Funkstation die Redundanz aus den Informationen entfernen.

Von Vorteil ist es, wenn nicht beide Funkstationen 3 und 6 die Information über die jeweilige benachbarte Funkstation 3 oder 6 versenden. Diejenige Funkstation, welche die Information versenden soll, kann einer bestimmten Bedingung unterliegen. In betrachteten Beispiel wird angenommen, dass die Funkstation mit der größeren Adresse die Information versendet. Somit sendet die Funkstation 6 die Information über die Existenz der Funkstation 3 in ihrer Nachbarschaft an die Funkstation 4. Ebenso sendet die Funkstation 6 Informationen über die Funkstation 5 an die Funkstation 4, die Funkstation 5 sendet Informationen über die Funkstation 3 an die Funkstation 2 und die Funkstation 4 sendet Informationen über die Funkstation 3 an die Funkstation 2.

Die Versendung der verschiedenen Informationen über die benachbarten Funkstationen erfolgt dabei in einer einzigen Nachricht. So sendet die Funkstation 4 eine Nachricht an die Funkstation 2, in welcher sie die ihr benachbarten Funkstationen 6 und 3 anzeigt, sowie die Nachbarschaft der Funkstationen 6 und 3, sowie der Funkstationen 6 und 5. Die von einer Funkstation selber ermittelten Informationen und die ihr von einer anderen Funkstation gesendeten Informationen über Nachbarschaftsbeziehungen können also in einer gemeinsamen Nachricht versendet werden.

Die Funkstation 1 sendet die von ihr empfangenen Informationen über die Nachbarschaftsbeziehungen an die zentrale Funkstation. Daraufhin sendet die zentrale Funkstation Z, wie in Figur 8 dargestellt, die gesamten Informationen über die Nachbarschaftsbeziehungen zwischen den Funkstationen 1, 2, 3, 4, 5 und 6 per Rundsenderuf R an die Funkstationen 1, 2, 3, 4, 5 und 6. Das Format, welches die zentrale Funkstation Z für die Versendung des Rundsenderufs R verwendet, kann sich von dem Format der von der Funkstation 1 gesendeten Nachricht unterscheiden. Somit können die Informationen von der zentralen Funkstation Z vor der Versendung in einer besonders effizienten Weise dargestellt werden.

Den Funkstationen 1, 2, 3, 4, 5 und 6 ist nach dem Empfang des Rundesenderufs R die aktuelle Topologie des Netzwerkes bekannt, so dass das Routing eines Datenpaketes von einer sendenden Funkstation zu einem Empfänger nun effizient durchgeführt werden kann. Da es sich bei den Funkstationen 1, 2, 3, 4, 5 und 6 um mobile Funkstationen handelt, ändert sich die Topologie des Netzwerkes im Laufe der Zeit. Daher wird das Verfahren der Ermittlung des Nachbarschaftsbeziehungen durch die Funkstationen 1, 2, 3, 4, 5 und 6 und der Versendung des Rundsenderufs durch die zentrale Funkstation Z in regelmäßigen Abständen durchgeführt. Die Zeitspanne zwischen den Wiederholungen des Verfahrens kann z.B. der mittleren Bewegungsgeschwindigkeit der Funkstationen 1, 2, 3, 4, 5 und 6 angepasst werden. Als geeignet erweist sich für die Zeitspanne ein Vielfaches der Taktfrequenz der Funkstationen 1, 2, 3, 4, 5 und 6. Die Identifikationsnummern der Flutungsnachrichten F1, F2, F3, F4, F5 und F6 stimmen für je eine Ermittlung der aktuellen Topologie des Netzwerkes überein. Nach Ablauf der Zeitspanne wird die nächste Ermittlung der Nachbarschaftsbeziehungen eingeleitet, wofür eine andere Identifikationsnummer für die Flutungsnachrichten verwendet wird. Der Identifikationsnummer der Flutungsnachrichten ist somit zu entnehmen, zu welchem Ermittlungsvorgang die jeweilige Flutungsnachricht zuzuordnen ist.

## Patentansprüche

1. Verfahren zur Organisation in einem Funkkommunikationssystem,
umfassend eine Vielzahl von teilnehmerseitigen Funkstationen (MT; 1, 2, 3, 4, 5, 6) mit jeweils einer Funkreichweite (C) und eine zentrale Funkstation (Z),
wobei die teilnehmerseitigen Funkstationen (MT; 1, 2, 3, 4, 5, 6) zumindest teilweise mobil sind,
wobei jede Funkstation (MT, Z; 1, 2, 3, 4, 5, 6) sich innerhalb der Funkreichweite (C) von zumindest einer benachbarten teilnehmerseitigen Funkstation (MT; 1, 2, 3, 4, 5, 6) befindet,
wobei zur Übertragung von Nutzdaten diese Nutzdaten von Funkstation (MT, Z; 1, 2, 3, 4, 5, 6) zu Funkstation (MT, Z; 1, 2, 3, 4, 5, 6) über die Funkreichweite (C) einer teilnehmerseitigen Funkstation (MT; 1, 2, 3, 4, 5, 6) gesendet werden,
wobei im Funkkommunikationssystem von jeder beliebigen ersten teilnehmerseitigen Funkstation (MT; 1, 2, 3, 4, 5, 6) zu jeder beliebigen zweiten teilnehmerseitigen Funkstation (MT; 1, 2, 3, 4, 5, 6) Nutzdaten direkt oder über eine oder mehrere andere Funkstationen (MT, Z; 1, 2, 3, 4, 5, 6) übertragbar sind,
**dadurch gekennzeichnet,**
**dass** die zentrale Funkstation (Z) Informationen über die benachbarte oder die benachbarten teilnehmerseitigen Funkstationen (MT; 1, 2, 3, 4, 5, 6) einer jeden teilnehmerseitigen Funkstation (MT; 1, 2, 3, 4, 5, 6) innerhalb zumindest eines Teilbereichs des Funkkommunikationssystems an die Vielzahl von teilnehmerseitigen Funkstationen (MT; 1, 2, 3, 4, 5, 6) innerhalb zumindest des Teilbereichs des Funkkommunikationssystems sendet.

2. Verfahren nach Anspruch 1, **dadurch gekennzeichnet,**
**dass** die zentrale Funkstation (Z) zusätzlich Informationen über die benachbarte oder die benachbarten teilnehmerseitigen Funkstationen (MT; 1, 2, 3, 4, 5, 6) der zentralen Funkstation (Z) sendet.

3. Verfahren nach Anspruch 1 oder 2, **dadurch gekennzeichnet,**
**dass** die zentrale Funkstation (Z) die Informationen per Rundsenderuf (R) sendet.

4. Verfahren nach einem der Ansprüche 1 bis 3, **dadurch gekennzeichnet,**
**dass** die Informationen von der Vielzahl von teilnehmerseitigen Funkstationen (MT; 1, 2, 3, 4, 5, 6) ermittelt wurden.

5. Verfahren nach Anspruch 4, **dadurch gekennzeichnet,**
**dass** zur Ermittlung der Informationen die teilnehmerseitigen Funkstationen (MT; 1, 2, 3, 4, 5, 6) innerhalb zumindest des Teilbereichs des Funkkommunikationssystems Signale (F1, F2, F3, F4, F5, F6) zur Anfrage nach benachbarten teilnehmerseitigen Funkstationen (MT; 1, 2, 3, 4, 5, 6) aussenden, auf welche Signale (F1, F2, F3, F4, F5, F6) hin die jeweiligen benachbarten teilnehmerseitigen Funkstationen (MT; 1, 2, 3, 4, 5, 6) unter der Bedingung, dass sie noch keiner anderen benachbarten teilnehmerseitigen Funkstation (MT; 1, 2, 3, 4, 5, 6) eine Antwort gesendet haben, eine Antwort (A2-1, A4-2, A3-2, A5-2, A6-4) senden.

6. Verfahren nach Anspruch 5, **dadurch gekennzeichnet,**
**dass** bestimmte teilnehmerseitige Funkstationen (MT; 1, 2, 3, 4, 5, 6) den benachbarten teilnehmerseitigen Funkstationen (MT; 1, 2, 3, 4, 5, 6), welchen sie eine Antwort (A2-1, A4-2, A3-2, A5-2, A6-4) gesendet haben, Informationen über benachbarte teilnehmerseitige Funkstationen (MT; 1, 2, 3, 4, 5, 6), welchen sie keine Antwort (A2-1, A4-2, A3-2, A5-2, A6-4) gesendet haben, übermitteln.

7. Verfahren nach einem der Ansprüche 1 bis 6, **dadurch gekennzeichnet,**
**dass** die zentrale Funkstation (Z) die Informationen regelmäßig sendet.

8. Verfahren nach Anspruch 7, **dadurch gekennzeichnet,**
**dass** die zentrale Funkstation (Z) die Informationen in einem festen Zeitabstand von zwischen 0.1 Sekunden und 5 Minuten sendet.

9. Verfahren nach Anspruch 8, **dadurch gekennzeichnet,**
**dass** die zentrale Funkstation (Z) die Informationen in einem festen Zeitabstand von zwischen 0.5 Sekunden und einer Minute sendet.

10. Verfahren nach Anspruch 7, **dadurch gekennzeichnet,**
**dass** die zentrale Funkstation (Z) die Informationen in einem festen Zeitabstand entsprechend einem Vielfachen einer Taktfrequenz der teilnehmerseitigen Funkstationen (MT; 1, 2, 3, 4, 5, 6) sendet.
